# FASCICULE DE BREVET EUROPEEN

(11) **EP 1 784 342 B1**
(45) Date de publication et mention de la délivrance du brevet: **26.03.2008**
(21) Numéro de dépôt: 05786079.3
(22) Date de dépôt: 30.06.2005
(51) Int. Cl.: B65D 73/02

(54) **DISPOSITIF DE CONDITIONNEMENT D'ELEMENTS DE FIXATION**
VORRICHTUNG ZUR KONDITIONIERUNG VON BEFESTIGUNGSELEMENTEN
DEVICE FOR CONDITIONING FIXING ELEMENTS

(30) Priorité: 06.07.2004 FR 0407498
(43) Date de publication de la demande: 16.05.2007
(73) Titulaire: L.R. ETANCO, 78400 Chatou (FR)
(72) Inventeur: LEMONTEY, Michel, F-78580 Maule (FR)
(74) Mandataire: de Saint-Palais, Arnaud Marie
(86) Numéro de dépôt international: PCT/FR2005/001707
(87) Numéro de publication internationale: WO 2006/013275

(56) Documents cités:
- EP-A- 0 935 969
- DE-A1- 19 828 892
- DE-U- 7 509 293
- US-A- 5 242 053
- US-A- 5 762 190
- US-A1- 2003 102 236
- US-A1- 2003 141 208

## Description

La présente invention a pour objet un dispositif de conditionnement d'éléments de fixation comprenant une première partie constituée par une pièce d'appui et une deuxième partie comportant une vis qui s'engage dans un orifice central de la pièce d'appui lors du vissage, ces éléments de fixation pouvant être montés de façon détachable sur un profilé de supports souple afin de constituer une bande facilement transportable et pouvant servir à alimenter un appareil automatisé servant à la fixation par vissage d'éléments mécaniques (voir par exemple le document EP-A-0 935 969).

Les éléments de fixation servent notamment, mais non exclusivement, à la fixation de membranes de panneaux isolants et de couverture sur une infrastructure de toit.

On sait que pour faciliter une telle fixation et pour réduire le délai de l'opération, on utilise de plus en plus souvent des appareils de vissage automatique comprenant un magasin dans lequel sont stockés une pluralité d'éléments de fixation de ce type.

Ainsi, on a déjà proposé dans le brevet FR-A-2 796 872 déposé au nom de RLB un appareil permettant le vissage d'éléments de fixation pouvant présenter des formes et des dimensions différentes sur lesquels sont prévissées des vis de tailles différentes, le magasin de cet appareil étant alimenté par des éléments de fixation éventuellement portés par une bande. Une fois engagée dans le magasin, cette bande est extraite en effectuant sur l'extrémité supérieure de celle-ci une traction axée perpendiculairement aux éléments de guidage.

Néanmoins, cette solution présente l'inconvénient d'utiliser des éléments de fixation dont les vis sont préengagées dans les perçages des pièces d'appui or, ces éléments de fixation sont relativement volumineux et, par conséquent, difficilement conditionnables et stockables.

Afin de réduire cet inconvénient, la Demanderesse a proposé dans le brevet EP-A-1 405 697 au nom de LR ETANCO un appareil permettant le vissage d'éléments de fixation dont les vis et les pièces d'appui sont alimentées séparément, leur assemblage ne s'effectuant qu'au moment du vissage. Les vis utilisées sont montées de façon détachable sur des profilés de supports souples de manière à être disposées parallèlement les unes aux autres et espacées les unes des autres d'une distance prédéterminée (pas) en formant une bande.

De cette façon, les éléments de fixation utilisés par cet appareil sont moins volumineux et les vis montées sur des profilés de supports souples sont plus facilement conditionnables et stockables.

Néanmoins, le volume des éléments de fixation, même s'il a été réduit, demeure important surtout si le nombre de vis nécessaires est grand de plus, le transport et le conditionnement des pièces d'appui ne s'en trouvent pas facilitées.

L'invention a donc plus particulièrement pour but de réduire ces inconvénients. Elle concerne plus particulièrement des éléments de fixation comprenant chacun une pièce d'appui munie d'un orifice servant au passage d'une vis de fixation, cette pièce d'appui étant solidaire d'un fût qui s'étend et débouche coaxialement audit orifice.

Selon l'invention, le dispositif met en oeuvre un profilé de supports souple présentant au moins en partie la forme d'une bande dont une bordure latérale est munie d'une succession d'encoches débouchant latéralement à l'extérieur par une ouverture rétrécie de largeur inférieure au diamètre des fûts de manière à ce que lesdits fûts puissent être engagés et être maintenus dans les encoches par clipsage.

Les pièces d'appui ainsi que les encoches sont conformées d'une telle façon que chaque pièce d'appui recouvre partiellement celle située à sa proximité immédiate de manière à ce que l'entraxe entre deux fûts adjacents soit sensiblement égal à la somme du rayon de la tête de la pièce d'appui et du rayon du fût si la pièce d'appui présente une forme cylindrique ou alors, à la moitié de la largeur de la tête de la pièce d'appui et du rayon du fût si la pièce d'appui présente une forme rectangulaire.

De cette façon, les éléments de fixation sont plus faciles à stocker, à transporter et à utiliser. Ainsi, le profilé de supports souple selon l'invention peut être utilisé notamment avec un appareil permettant le vissage d'éléments de fixation sur lesquels sont prévissées des vis tel que celui faisant l'objet du brevet FR-A-2 796 872 précité. Le profilé de supports pourra également être utilisé avec un appareil permettant un vissage des éléments de fixation à l'aide de vis alimentées séparément dans ce cas, le profilé de supports souple comprend des encoches sur lesquelles se clipsent des pièces d'appui liées à un fût, l'insertion de la vis dans le fût s'effectuant automatiquement par l'appareil.

Avantageusement, la jonction de la pièce d'appui et du fût est constituée par une collerette comprenant des nervures radiales disposées régulièrement autour de la base du fût, ces nervures permettant notamment de rigidifier la collerette et d'assurer un meilleur contact entre ladite pièce d'appui et le support sur lequel est fixé la vis en prévenant la rotation de cette pièce d'appui par rapport à ce support.

Chaque pièce d'appui pourra également comprendre sur sa face inférieure des picots permettant d'améliorer l'adhérence entre la pièce d'appui et le support sur lequel est fixé la vis réduisant ainsi le jeu pouvant exister entre ces deux éléments.

Un mode d'exécution de l'invention sera décrit ci-après, à titre d'exemples non limitatifs, avec référence aux dessins annexés, dans lesquels :
La figure 1 est une vue en perspective d'un profilé de supports souple.
La figure 2 est une vue en perspective d'un profilé de supports souple comprenant des éléments de fixation comportant une pièce d'appui, dont la tête présente une forme circulaire.
La figure 3 est une vue en perspective d'un profilé de supports souple comprenant des éléments de fixation comportant une pièce d'appui, dont la tête présente une forme rectangulaire.
La figure 4 est une vue en perspective de la face inférieure de la tête d'une pièce d'appui.

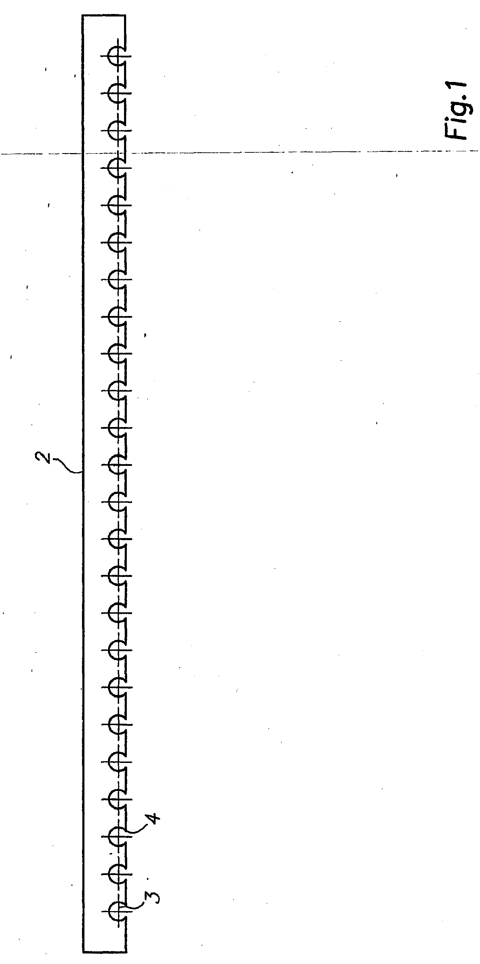

Dans l'exemple représenté sur la figure 1, le dispositif selon l'invention 1 comprend un profilé de supports souple 2 présentant sensiblement la forme d'une bande et constitué de matière plastique ou de carton semi-rigide.

Le profilé de supports souple 2 comprend une bordure latérale munie d'une succession d'encoches 3 espacées à intervalles réguliers et débouchant latéralement à l'extérieur par une ouverture rétrécie 4 de forme sensiblement cylindrique.

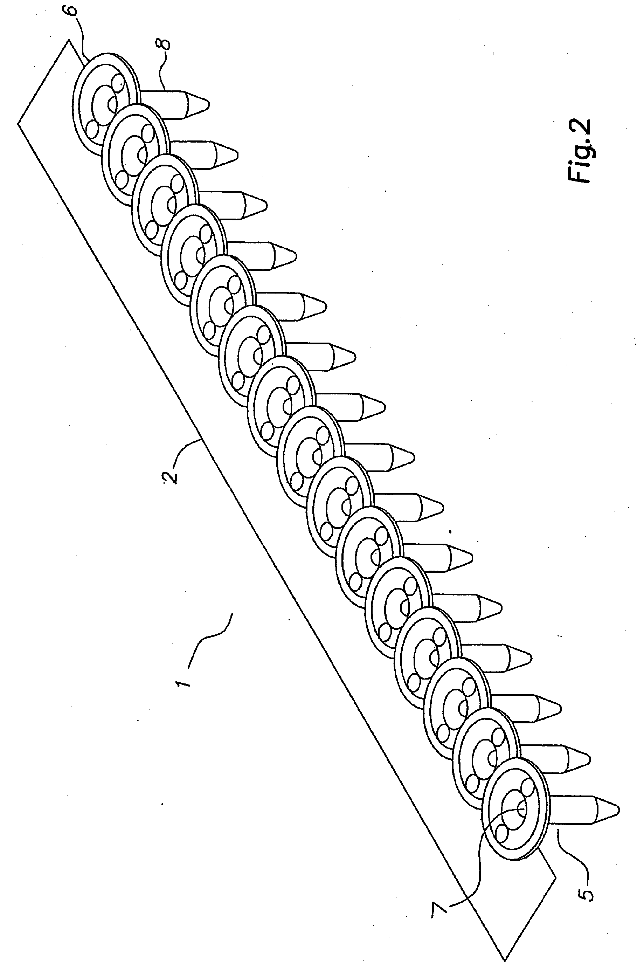

Le dispositif selon l'invention 1 tel que représenté sur la figure 2 comprend également des éléments de fixation 5 comportant une pièce d'appui 6, présentant la forme d'une rondelle pouvant être en matière plastique moulée ou en tôle emboutie, et munie d'un orifice 7 formé au fond d'une concavité destinée à recevoir la tête d'une vis de fixation.

Chaque pièce d'appui 6 est solidaire d'un fût tubulaire 8 qui s'étend et débouche coaxialement audit orifice 7. Le diamètre intérieur du fût 8 est prévu de manière à ce que la tête de la vis puisse s'y engager et venir en butée dans sa partie inférieure contre un épaulement amorçant une réduction du diamètre.

Les fûts 8 s'engagent et sont maintenus dans les encoches 3 du profilé de supports souple 2 par clipsage dans lesdites ouvertures rétrécies 4 qui présentent chacune une largeur inférieure au diamètre des fûts 8, l'entraxe entre deux vis adjacentes étant égale à la somme du rayon de la tête de la pièce d'appui 6 et du rayon du fût 8, chaque pièce d'appui 6 recouvre partiellement celle située à sa proximité immédiate.

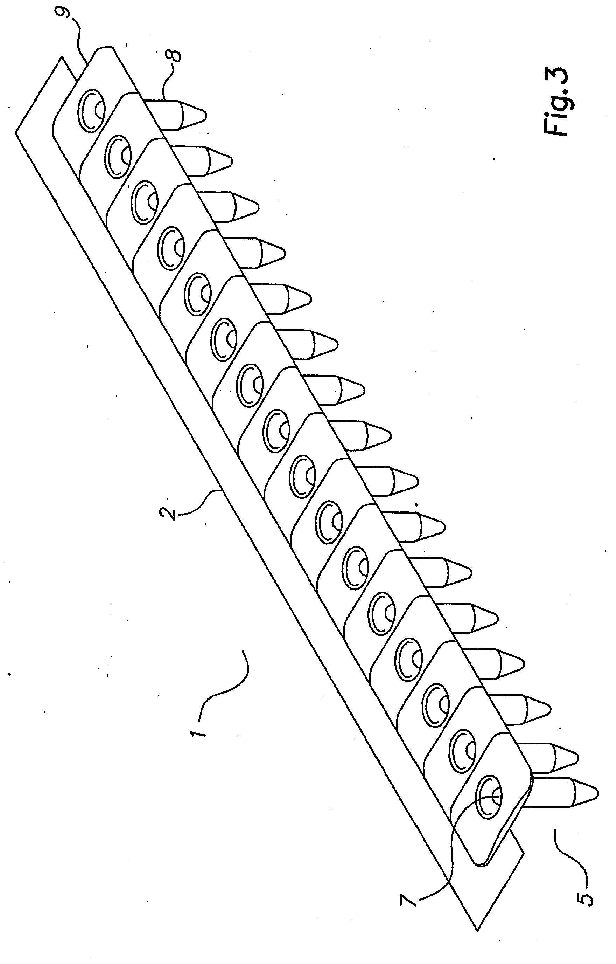

Dans l'exemple représenté sur la figure 3, la pièce d'appui 9 présente sensiblement la forme d'une plaquette rectangulaire, en matière plastique moulée ou en tôle emboutie, et munie d'un orifice 7 formé au fond d'une concavité destinée à recevoir la tête de la vis.

L'entraxe entre deux vis adjacentes est alors sensiblement égale à la moitié de la largeur de la tête de la pièce d'appui 9 et du rayon du fût 8.

Le profilé de supports souple 2 sur lequel sont attachées les pièces d'appui 6, 9 est introduit dans le magasin de l'appareil permettant le vissage d'éléments de fixation 5, l'utilisateur l'extrait ensuite en effectuant sur l'extrémité supérieure de celui-ci une traction axée perpendiculairement à l'axe des fûts 8.

Le profil de supports souple 2 qui comprend des encoches 3 dans lesquelles se clipsent des pièces d'appui 6, 9 liées à un fût tubulaire 8 est chargé dans un appareil de vissage automatique, la vis étant soit prémontée dans le fût 8, soit insérée automatiquement dans le fût 8 par l'appareil de pose.

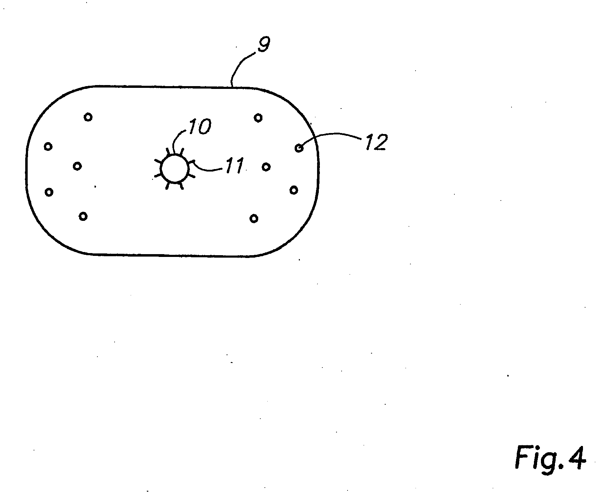

Avantageusement, tel que cela est représenté sur la figure 4, la jonction de la pièce d'appui 9 et du fût 8 est constituée par une collerette 10 comprenant des nervures radiales 11, disposées régulièrement autour de la base du fût 8, ces nervures 11 permettant notamment de rigidifier la collerette 10 et d'assurer un meilleur contact entre ladite pièce d'appui 9 et le support sur lequel est fixé la vis en prévenant la rotation de cette pièce d'appui 9 par rapport à ce support.

De manière avantageuse, chaque pièce d'appui 9 pourra également comprendre sur sa face inférieure des picots 12 permettant d'améliorer l'adhérence entre la pièce d'appui 9 et le support sur lequel est fixé la vis réduisant ainsi le jeu pouvant exister entre ces deux éléments.

## Revendications

1. Dispositif de conditionnement (1) d'éléments de fixation (5), comportant:
• des éléments de fixation (5) comprenant chacun une pièce d'appui (6, 9) munie d'un orifice (7) servant au passage d'une vis de fixation, cette pièce d'appui (6, 9) étant solidaire d'un fût (8) qui s'étend et débouche coaxialement audit orifice (7);
• un profilé de supports souple (2) présentant au moins en partie la forme d'une bande dont une bordure latérale est munie d'une succession d'encoches (3) débouchant latéralement à l'extérieur par une ouverture rétrécie (4) de largeur inférieure au diamètre des fûtes (8) de manière à ce que lesdits fûts (8) puissent être engagés et être maintenus dans les encoches (3) par clipsage; **caractérisé en ce que**
les pièces d'appui (6, 9) ainsi que les encoches (3) sont conformées d'une telle façon que chaque pièce d'appui (6, 9) recouvre partiellement celle située à sa proximité immédiate de manière à ce que l'entraxe entre deux fûts adjacents (8) soit sensiblement égal à la somme du rayon de la tête de la pièce d'appui (6, 9) et du rayon du fût (8) si la pièce d'appui (6) présente une forme cylindrique ou alors, à la moitié de la largeur de la tête de la pièce d'appui (6, 9) et du rayon du fût (8) si la pièce d'appui (9) présente une forme rectangulaire.

2. Dispositif de conditionnement (1) d'éléments de fixation (5) selon la revendication 1,
**caractérisé en ce que** le profilé de supports souple (2) est constitué de matière plastique ou de carton semi-rigide.

3. Dispositif de conditionnement (1) d'éléments de fixation (5) selon l'une des revendications 1 et 2,
**caractérisé en ce que** le diamètre intérieur d'un fût (8) est prévu de manière à ce que la tête de la vis puisse s'y engager et venir en butée dans sa partie inférieure contre un épaulement amorçant une réduction du diamètre.

4. Dispositif de conditionnement (1) d'éléments de fixation (5) selon l'une des revendications précédentes,
**caractérisé en ce que** les pièces d'appui (6, 9) sont en matière plastique moulée ou en tôle emboutie.

5. Dispositif de conditionnement (1) d'éléments de fixation (5) selon l'une des revendications précédentes,
**caractérisé en ce que** la jonction de la pièce d'appui (6, 9) et du fût (8) est constituée par une collerette (10) comprenant des nervures radiales (11), disposées régulièrement autour de la base du fût (8).

6. Dispositif de conditionnement (1) d'éléments de fixation (5) selon l'une des revendications précédentes,
**caractérisé en ce que** chaque pièce d'appui (6, 9) comprend sur sa face inférieure des picots (12).

## Claims

1. A device (1) for packaging fixation components (5), including:
• fixation components (5) each comprising a supporting part (6, 9) provided with an orifice (7) used for letting through a fixing screw, this supporting part (6, 9) forming one piece with a cylindrical stem (8) which extends and emerges coaxially with said orifice (7);
• a flexible profile (2) of supports having at least partly the shape of a strip, a side edge of which is provided with a succession of notches (3) emerging laterally on the outside through a narrowed aperture (4) with a width less than the diameter of the cylindrical stems (8) so that said cylindrical stems (8) may be engaged and maintained in the notches (3) by clips; **characterized in that**
the support parts (6, 9) as well as the notches (3) are conformed in such a way that each supporting part (6, 9) partly covers the one located in close proximity to it so that the centre distance between two adjacent cylindrical stems (8) is substantially equal to the sum of the radius of the head of the supporting part (6, 9) and of the radius of the cylindrical stem (8) if the supporting part (6) has a cylindrical shape or else, to half the width of the head of the supporting part (6, 9) and of the radius of the cylindrical stem (8) if the cylindrical stem part (9) has a rectangular shape.

2. The device (1) for packaging fixation components (5) according to claim 1,
**characterized in that** the flexible support profile (2) consists of plastic or semirigid cardboard.

3. The device (1) for packaging fixation components (5) according to any of claims 1 and 2,
**characterized in that** the inner diameter of a cylindrical stem (8) is provided so that the head of the screw may engage therein and will abut in its lower portion against a shoulder initiating a reduction in the diameter.

4. The device (1) for packaging fixation components (5) according to any of the preceding claims,
**characterized in that** the supporting parts (6, 9) are in molded plastic material or embossed metal sheet.

5. The device (1) for packaging fixation components (5) according to any of the preceding claims,
**characterized in that** the junction of the supporting part (6, 9) and of the cylindrical stem (8) is formed by a collar (10) comprising radial ribs (11), regularly positioned around the base of the cylindrical stem (8).

6. The device (1) for packaging fixation components (5) according to any of the preceding claims,
**characterized in that** each supporting part (6, 9) comprises pins (12) on its lower face.

## Patentansprüche

1. Konditionierungsvorrichtung (1) für Befestigungselemente (5), mit:
- Befestigungselemente (5) mit je einem Stützteil (6, 9), das mit einer Öffnung (7) versehen ist, die zur Durchführung einer Befestigungsschraube dient, wobei dieses Stützteil (6, 9) einteilig mit einem Schaft (8) verbunden ist, der sich koaxial zur genannten Öffnung (7) erstreckt und darin mündet;
- ein biegsames Trägerprofil (2), das mindestens teilweise die Form eines Bandes aufweist, an welchem eine Seitenumrandung mit aufeinander folgenden Nuten (3) versehen ist, die seitlich durch eine sich verjüngende Öffnung (4) nach außen ausmünden, die eine kürzere Breite als der Durchmesser des Schaftes (8) aufweist, so dass die genannten Schäfte (8) befestigt und in den Nuten (3) durch Einschnappen gehalten werden können,
**gekennzeichnet dadurch, dass**
die Stützteile (6, 9) sowie die Nuten (3) so ausgebildet sind, dass jedes Stützteil (6, 9) teilweise jenes überdeckt, welches in seiner direkten Nähe liegt, so dass der Achsabstand zwischen den zwei anliegenden Schäften (8) fast der Summe des Radius des Kopfes des Stützteils (6, 9) und des Radius des Schaftes (8) gleich ist, wenn das Stützteil (6) eine zylindrische Form aufweist, oder aber auf der halben Breite des Kopfes des Stützteils (6, 9) und des Radius der Nut (8), wenn das Stützteil (9) eine rechteckige Form aufweist.

2. Konditionierungsvorrichtung (1) für Befestigungselemente (5) nach Anspruch 1, **gekennzeichnet dadurch, dass** das biegsame Trägerprofil (2) aus Kunststoff oder halbstarrem Karton ausgebildet ist.

3. Konditionierungsvorrichtung (1) für Befestigungselemente (5) nach einem der Ansprüche 1 und 2, **gekennzeichnet dadurch, dass** der Innendurchmesser eines Schaftes (8) so vorgesehen ist, damit der Schraubenkopf darin eingreifen kann und in seinem Unterteil gegen einen Ansatz zum Anschlag kommt und eine Reduzierung des Durchmessers beginnt.

4. Konditionierungsvorrichtung (1) für Befestigungselemente (5) nach einem der vorangehenden Ansprüche, **gekennzeichnet dadurch, dass** die Stützteile (6, 9) aus geformten Kunststoffmaterial oder aus tiefgezogenem Blech hergestellt sind.

5. Konditionierungsvorrichtung (1) für Befestigungselemente (5) nach einem der vorangehenden Ansprüche, **gekennzeichnet dadurch, dass** die Verbindungsstelle des Stützteils (6, 9) und des Schaftes (8) aus einem Kragen (10) besteht und radiale Rippen (11) aufweist, die regelmäßig um die Basis des Stützteils (8) herum angeordnet sind.

6. Konditionierungsvorrichtung (1) für Befestigungselemente (5) nach einem der vorangehenden Ansprüche, **gekennzeichnet dadurch, dass** jedes Stützteil (6, 9) auf seiner untersten Seite Noppen (12) umfasst.
